(19)

Europäisches
Patentamt
European
Patent Office
Office européen
des brevets

(11) **EP 1 990 964 A1**

(12) **EUROPEAN PATENT APPLICATION**

(43) Date of publication:
    **12.11.2008 Bulletin 2008/46**

(51) Int Cl.:
    ***H04L 27/26*** (2006.01)     ***H04L 27/34*** (2006.01)

(21) Application number: **07301024.1**

(22) Date of filing: **10.05.2007**

(84) Designated Contracting States:
    **AT BE BG CH CY CZ DE DK EE ES FI FR GB GR
    HU IE IS IT LI LT LU LV MC MT NL PL PT RO SE
    SI SK TR**
    Designated Extension States:
    **AL BA HR MK RS**

(71) Applicant: **Thomson Licensing
    92100 Boulogne-Billancourt (FR)**

(72) Inventors:
    • **Mocquard, Olivier
      92648 Boulogne Cedex (FR)**

    • **Gueguen, Arnaud
      92648 Boulogne Cedex (FR)**
    • **David, Jérôme
      92648 Boulogne Cedex (FR)**

(74) Representative: **Le Dantec, Claude et al
    Thomson,
    46, Quai Alphonse Le Gallo
    92100 Boulogne-Billancourt (FR)**

(54)     **Method of reducing a peak to average power ratio of a multicarrier signal**

(57)     In order to reduce a peak to average ratio in a wireless transmission, a coding of an input data comprises:
- mapping of input data on a basic constellation;
- generation (60) of a frequency domain symbol per transmit antenna;
- generation (611,61Ntx) of time domain OFDM signals;
- clipping (621,620Ntx) of time domain OFDM signals to get modified time domain symbols;
- generation (631,63Ntx) of frequency domain modified signal;
- de-mapping (64) of frequency domain modified signal to generate modified constellations;
- amplification (65,66,67) of the difference (65) between the modified constellation signals and the basic constellation signals with a fixed value for each carrier independent of input data to get a resulting frequency domain signal;
- projection (68) of the resulting frequency domain signal on extended region;
- generation of the resulting time domain signal.

Fig 6

**Description**

**1. Field of the invention.**

The present invention relates to the field of wireless digital communication. More specifically, it deals with an efficient way to implement a coding that is used, for example, in the coding of a signal to be transmitted through a noisy channel. It proposes also a corresponding method for decoding a received signal coded with the method.

**2. Technological background.**

In the field of wireless telecommunication, multicarrier modulation such as OFDM (Orthogonal Frequency Division Multiplexing) are frequently used. One the main drawback of any OFDM transmission system is the high Peak-to-Average power Ratio (PAR) of the transmitted signal. High PAR values significantly reduce the power efficiency of the High Power Amplifiers (HPA) or degrade the performances of the transmission system.
Many techniques have been proposed to reduce this PAR value, but most of them either require to reduce the efficiency of the transmission or deliberately degrade the quality of the transmitted signal.
Active Constellation Extension (ACE) has been proposed as an efficient method to reduce the PAR value in the SISO case. B.S. Krongold, Woo and Jones disclose an implementation of ACE in the document entitled "Fast Active Constellation Extension for MIMO-OFDM PAR Reduction » and published in conference records of the 39th Asilomar conference on signals, systems and computers 2005. This method is iterative and at each iteration, a step size $\mu$ is used. This step size is chosen to minimize the peak magnitude at each iteration., According to this document, the key to efficient PAR reduction is proper selection of the step size in iterative process. The step size is computed according to the value of the signal and correction at the previous iteration.
However it has been demonstrated in a document written by Cristina Ciochina,Fabien Buda and Hikmet Sari in "An Analysis of OFDM Peak Power Reduction Techniques for WiMAX Systems", (and published in SEQUENS Communications White Paper) that the performances gain could be very small when using a classical HPA after the PAR reduction.
The main drawback of the state of the art is that it is difficult to reduce the PAR while having a reduced complexity in the encoder and/or in the decoder.

**3. Invention summary.**

The invention is aimed at alleviating these drawbacks of the prior art.
More particularly, the objective of the invention is to reduce the PAR to transmit a multi-carrier signal over a wireless channel, while enabling a coder and/or a decoder with a reduced complexity.
The invention relates to a method of coding of an input data, comprising :

- mapping of input data on a basic constellation;
- mapping of input data on multiple carriers to generate a frequency domain symbol per transmit antenna to generate multi-carrier signals;
- generation of time domain OFDM (or Orthogonal Frequency Division Multiplexing) signals with IFFTs (or Inverse Fast Fourrier Transforms) applied each to frequency domain symbol of the multi-carrier signals;
- clipping of time domain OFDM signals with a fixed threshold to get modified time domain symbols;
- generation of frequency domain modified signal through FFT (or Fast Fourrier Transforms) applied to modified time domain symbols;
- de-mapping of frequency domain modified signal to generate modified constellations;
- amplification of the difference between the modified constellation signal and the basic constellation with a fixed value for each carrier independent of input data to get a resulting frequency domain signal;
- projection of the resulting frequency domain signal on extended region associated to point of corresponding basic constellation to get a resulting frequency domain signal;
- generation of the resulting time domain signal with reduced peak to average power ratio using a IFFT applied to the resulting frequency domain signal.

The basic constellation is e.g. a nQAM (or n Quadrature Amplitude Modulation) or nQPSK (or Quaterly Phase Shift Keying) constellation.
Mapping of input data could be SISO mapping in SISO transmission or part of STBC/SFBC mapping in MIMO transmission. De-mapping frequency domain modified signal could be SISO de-mapping in SISO transmission or part of STBC/SFBC de-mapping in MIMO transmission

Multicarrier modulation is advantageously OFDM modulation.

Contrary to Krongold technique, the method is not iterative.

According to the invention, the projection area can be spatially limited or not.

According to a specific embodiment, a fixed value of amplification is associated to each carrier.

The fixed value is the same for all carriers in some embodiments or not the same in other embodiments.

Advantageously, the projection is made on a discrete extended constellation to get a resulting discrete frequency domain signal.

According to an advantageous embodiment, the projection area is limited by a bound.

According to a specific embodiment, the method includes:

- the mapping of input data on a basic constellation;
- a space/time or space/frequency coding of mapped data;
- the mapping of input data on multiple carriers applied to space/time or space/frequency coded mapped data to generate a frequency domain symbol per transmit antenna to generate multi-carrier signals;
- generation of time domain OFDM signals with IFFTs applied each to frequency domain symbol of the multi-carrier signals;
- clipping of time domain OFDM signals with a fixed threshold to get modified time domain symbols;
- generation of frequency domain modified signal through FFT applied to modified time domain symbols;
- a space/time or space/frequency decoding of frequency domain modified signal to get a modified mapped data;
- de-mapping of frequency domain modified signal to generate modified constellations;
- amplification of the difference between the modified constellation signal and the basic constellation with a fixed value for each carrier independent of input data to get a resulting frequency domain signal;
- projection of the resulting frequency domain signal on extended region associated to point of corresponding basic constellation to get a resulting frequency domain signal;
- a space/time or space/frequency coding of resulting frequency domain signal;
- a space/time or space/frequency decoding of frequency domain modified signal to get a modified mapped data.

The modified mapped data is then a constellation of frequency domain modified signal.

According to an advantageous embodiment, the method includes a filtering of time domain OFDM signals, the clipping of time domain signals being applied to filtered time domain signals.

According to a specific embodiment, the method includes:

- a channel correction of multi-carrier signals, the generation of time domain OFDM signals with IFFTs being applied each to frequency domain symbol of the multi-carrier signals of time domain OFDM signals after channel correction;
- a reverse channel correction of frequency domain modified signals, the de-mapping of frequency domain modified signal being applied after reverse channel correction.

The invention relates also to the corresponding decoding method and more specifically to a method of decoding a received signal, wherein the received signal corresponds to a transmitted signal that has been obtained by mapping input data on a basic constellation and on multiple carriers to generate a frequency domain symbol per transmit antenna to generate multi-carrier signals and transmission on a signal after projection of the a continuous frequency domain signal on extended region associated to point of corresponding basic constellation;
and wherein the method of decoding comprises:

- a decoding step providing an estimation of transmitted signal on extended constellation associated to extended region to provide an extended decoded signal; and
- an assignation of symbols of extended decoded signal on symbols of basic constellation.

## 4. Brief description of the drawings.

The invention will be better understood, and other features and advantages will become apparent from reading the description that follows, the description referring to the appended drawings in which:

- Figure 1 represents a wireless network;
- Figure 2 represents an exemplary architecture of a data transmitter capable of sending data in a way compliant with the invention;
- Figure 3 represents an exemplary architecture of a data receiver according to a specific embodiment of the invention;
- Figures 4 and 5 represent an exemplary architecture of respectively a coder inside the transmitter of figure 2 and a decoder inside the receiver of figure 3;

- Figure 6 is a schematic view of a encoding part in the encoder of figure 2 in a case the dimension of the encoding method equals two;
- Figures 7 to 9 relates to the encoding part, according to different variants of the invention;
- Figures 11 to 17 represents different views of the signal in the encoder;
- Figure 18 illustrates the distribution of a PAR value according to the invention compared to the distribution of a PAR value according to prior art;
- Figure 19 discloses an encoding method implemented in a transmitter, according to the invention;
- Figure 20 represents the transformation of a constellation in the decoder of figure 3;
- Figure 21 discloses an encoding method implemented in a transmitter, according to the invention; and
- Figure 22 gives examples of extended masks that can be used by the transmitter of figure 2.

## 5. Detailed description of the invention.

The invention enables a reduced PAR in a transmission of data over a wireless channel, while keeping a reduced complexity of coders (e.g. as the coding method is not iterative) and/or decoders (especially in a MIMO lattice decoder when the number of dimensions becomes large. The invention can be applied to many systems that are based on multi-carrier transmission. It is compliant with many decoding methods including ML (Maximum Likelihood) or non ML decoding. It is compliant to decoding of data transmitted through a SISO (Single Input Single Output) or MIMO (Multiple Input Multiple Output) channel.

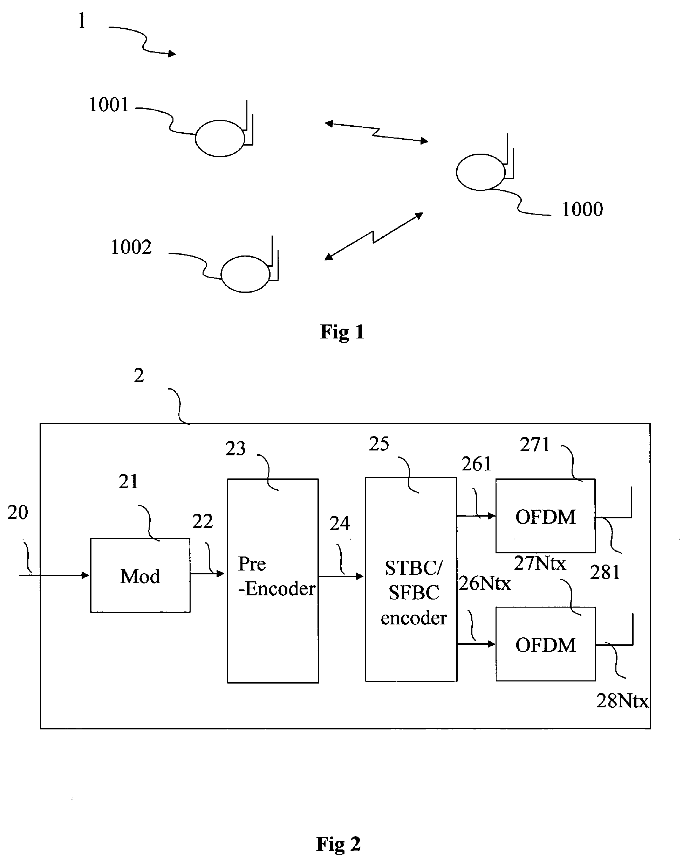

**Figure 1** represents a wireless network 1 comprising several stations 1000 to 1002. Each station 1000 to 1002 comprises a transmitter and a receiver using a MIMO (or Multiple Input Multiple Output) antenna system. Station 1000 communicates with stations 1001 and 1002 through a wireless link.

**Figure 2** represents an exemplary architecture of a data transmitter 2 capable of sending data in a way compliant with the invention applied to decoding of a signal transmitted through a MIMO noisy channel. The data transmitter 2 can be implemented in stations 10 to 12.

The transmitter 2 comprises:

- a modulator 21;
- an pre-encoder 23;
- a STBC (Space Time Block Code)/SFBC (Space Frequency Block Code) encoder 25;
- $Ntx$ OFDM modulators 271 to 27$Ntx$ each modulating with an OFDM modulator an input signal 261 to 26$Ntx$; and
- $Ntx$ antennas 281 to 28$Ntx$, each being associated to an OFDM modulator respectively 271 to 27$Ntx$.

Here, antennas are considered as including RF (Radio Frequency) part (especially, frequency transposition, power amplification and filtering). Advantageously, it includes a linearised HPA (High Power Amplifier) that enables to avoid distortions of transmitted signal.

The transmitter 2 receives a binary signal 22 which is digitally modulated by the modulator 21 with a first modulation which is, for instance a QAM modulation (or "Quadrature Amplitude Modulation") (e.g. 16 QAM or 64QAM). The modulator 21 generates groups of Q' complex QAM symbols $S1$ to $SQ'$. Q' is for example equal to 1024 and equals the product of the STBC/SFBC rate by the numbers of transmit antennas ($Ntx$) and by the number of subcarriers. In our example, the code rate is e.g. equal to 1, $Ntx$ equals 2 and the number of subcarriers equals 512.

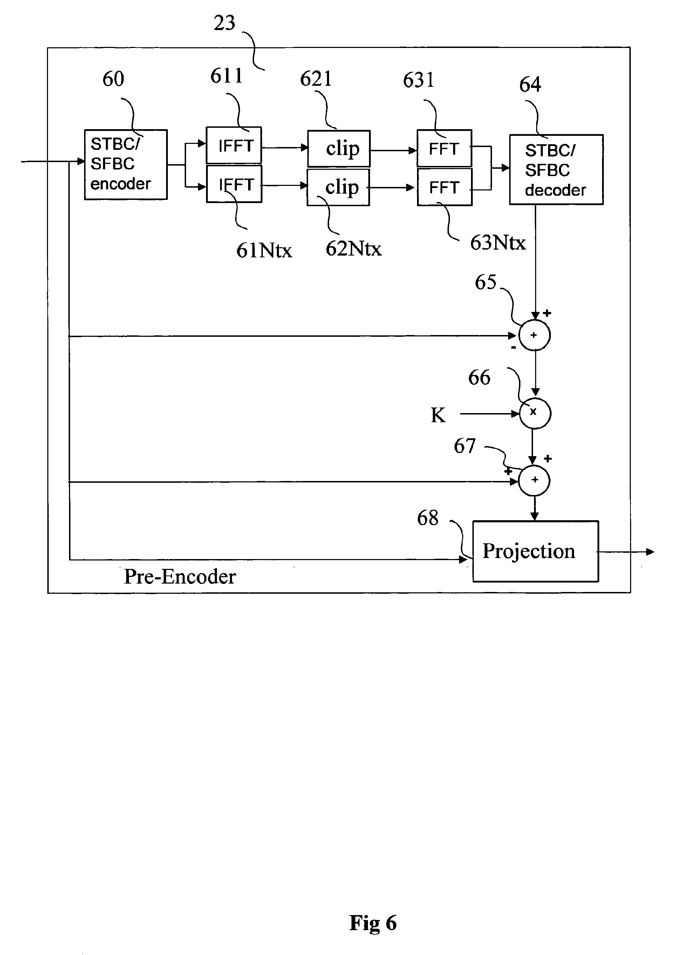

Each group of $Q'$ symbols 22 is then pre-encoded according to the invention, as it will be detailed in view of figures 6, 9 or 10.

After pre-encoding, each group of $Q'$ symbols 24 is then encoded with the encoder 25 to form a STBC/SFBC codeword. The STBC/SFBC is, for instance, a Golden code such as disclosed in document "The Golden Code: A 2 x 2 Full-Rate Space-Time Code with Non-Vanishing Determinants," which has been written by J.-C. Belfiore, G. Rekaya, E. Viterbo (and published in IEEE Transactions on Information Theory, vol. 51, n. 4, pp. 1432-1436, Apr. 2005.). According to a variant, the STBC is as disclosed in "Space-Time block codes from orthogonal designs" document written by V.Tarokh, H. Jafarkhani, and R. A. Calderbank (and published in IEEE Transactions on Information Theory, vol. 45, pp. 1456-1467, July 1999). The STBC/SFBC is based on a complex matrix of dimension $N_{tx}*N$ where $N$ is the time dimension of the STBC/SFBC.

At the output of encoder 25, the generated signal has been mapped in a time/frequency mapper that transmits a dedicated signal 261 to 26$Ntx$ to each of OFDM modulator 271 to 27$Ntx$. Then, each modulator 271 to 27$Ntx$ modulates its input signal into an OFDM modulated signal that is sent on an antenna respectively 281 to 28Ntx (after possibly filtering, frequency transposition and amplification as usually done in a radio transmitted signal). As summary, the information data is then sent on a MIMO channel with a reduced PAR.

**[0031]** There are many possible variants of the transmitter that are compliant with the invention.

According to other variants (that are compliant with previous ones), the first modulation can be of any digital modulation, e.g. nPSK (for "Phase Shift Keying with n phase values) or nQAM (eg with n equals to 16, 32, 64, 256...).

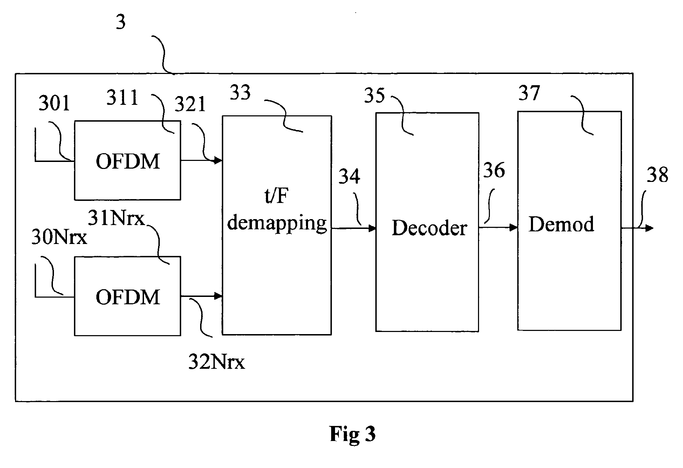

**Figure 3** represents an exemplary architecture of a data receiver 3 according to a specific embodiment of the invention. The receiver 3 receives a signal send by the transmitter 2 through a wireless channel. This channel is noisy and comprise Additive White Gaussian Noise (or AWGN) and possibly other noise such as interferences. The sent signal can also be affected by multipath echos and/or Doppler effect. The data receiver 3 can be implemented in stations 1000 to 1002.

The receiver 3 comprises:

- *Nrx* antennas 301 to 30*Nrx;*
- *Nrx* OFDM demodulators 311 to 31*Nrx* each demodulating a noisy OFDM modulated signal transmitted by an antenna respectively 301 to 30*Nrx;*
- a time/frequency demapper 33;
- a decoder 35; and
- a demodulator 37.

The receiver 3 matches the transmitter 2 (especially for modulation and code used by the transmitter). Then, according to variants using single carrier modulation inside the transmitter, the OFDM demodulators are replaced by the corresponding single carrier demodulators.

The receiver 3 comprises *Nrx* receive antennas 301 to 30*Nrx* so that the received signal 301 to 30*Nrx* can be represented by a *Nrx\*N* matrix, or equivalently a (*Nrx\*N)\**1 vector **R**. *N* is, for instance, equal to 2 and represents the time and/or frequency range occupied by the STBC.

The transmission between the encoder 23 and decoder 35 can be modeled by the following equation:

$$\mathbf{R} = \underbrace{\begin{pmatrix} \mathbf{H}_1 & \mathbf{0} & \cdots & \mathbf{0} \\ \mathbf{0} & \mathbf{H}_2 & \ddots & \vdots \\ \vdots & \ddots & \ddots & \mathbf{0} \\ \mathbf{0} & \cdots & \mathbf{0} & \mathbf{H}_N \end{pmatrix}}_{\mathbf{G}} \mathbf{CS} + \mathbf{v} = \mathbf{GS} + \mathbf{v} \qquad \text{(equation 1)}$$

Where the different parameters are as follows:

- **R** is the complex (*Nrx\*N)\**1 received vector;
- **H**$_i$ is the complex *Nrx\*Ntx* channel matrix at time/frequency interval *i* (frequency corresponds to a carrier of the multicarrier modulation; according to a variant using a single carrier modulation the interval *i* corresponds to a time interval);
- **H**=diag(**H**$_1$,..., **H**$_N$) is the complex block diagonal (*N\*Nrx)\*(N\*Ntx*) channel matrix at time/frequency intervals 1 to N;
- **C** is the complex (*Ntx\*N)\*Q* STBC/SFBC coding matrix (e.g. Q=4 or 8), where Q is the number of input complex symbols per STBC/SFBC codeword;
- **S** is the complex *Q\**1 input vector of extended modulated symbols (after pre-encoding). **CS** in equation (1) denotes the STB encoded signal. The encoding process is represented by complex matrix multiplications.;
- v is the complex (*N\*Nrx)\**1 Additive White Gaussian Noise (or AWGN) vector with autocorrelation matrix **R**$_v$ =$\sigma^2$**I***NNrx,* where **I***NNrx* is the identity matrix of size (*N\*Nrx)\*(N\*Nrx*) and $\sigma^2$ represents the variance of the AWGN.

According to a variant, the space/time coding process takes place with real inputs (instead of complex inputs). Then, the C matrix is a real matrix with a dimension (2*Ntx\*N)\*(2Q).*

When the additive noise and interferences corrupting the received signal is not white, a whitening filter is advantageously implemented before the decoder 35. $\sigma^2$ represents the variance of the resulting whitened noise.

The time/frequency demapper 33 received demodulated signal from OFDM demodulators 311 to 31*Nrx* and is doing the reverse mapping (corresponding to dual operation of encoder 25). It provides a demapped signal 34 to decoder 35.

The decoder 35 can be any decoder adapted to decode a signal that is base on a coding such as implemented in the transmitter 2. According to a specific embodiment, the decoder 35 is a lattice decoder and is particularly well suited to perform ML decoding of the STBC/SFBC encoded signal. It is for example based upon the method disclosed in "A universal lattice code decoder for fading channel," written by E. Viterbo and J. Boutros (and published in IEEE Trans. Inform. Theory, vol. 45, pp. 1639-1642, July 1999) or in document "Lattice basis reduction: Improved practical algorithms and solving subset sum problems," written by C.P. Schnorr and M. Euchner (and published in Math. ProGraming, vol. 66, pp. 181-191, 1994). Those documents disclose ML recursive decoding algorithms that are based on a lattice and enable enumeration of points and selection of points after reception of a signal representative of data. The selection of points is done in a sphere the diameter of which depends on the signal/noise ratio. After computation of some metrics, a ML point is selected either by enumerating candidates points in a sphere (Boutros) or by successive projections on sublattices (Schnorr/Euchner). The decoding can also be implemented in improved decoders such as disclosed in the patent applications filed under references EP06301039.1, EP06301038.3 and EP06301041.7 entitled "Method of decoding of a multidimensional received signal and corresponding device", and EP06301223.1 entitled "Method of decoding of a multidimensional received signal" and filed in the name Thomson Licensing SA.

Advantageously, the decoder is adapted to take into account the specificities of the preencoder 23, and especially of a projection. Eg. if the signal transmitted to the OFDM modulators 271 to *27Ntx* correspond to a signal with a first constellation that is different than a second constellation used by the modulator 21, then the decoder 35 is adapter to decode a received signal corresponding to the first constellation.

The decoder 35 sends a decoded signal 36 to the demodulator 37. The demodulator 37 demodulates the decoded signal 36 according to the mapping associated to the second constellation and provides to an application a demodulated signal (e.g. bits). In other terms, the demodulator 37 associates a symbol of the second constellation to a decoded signal.

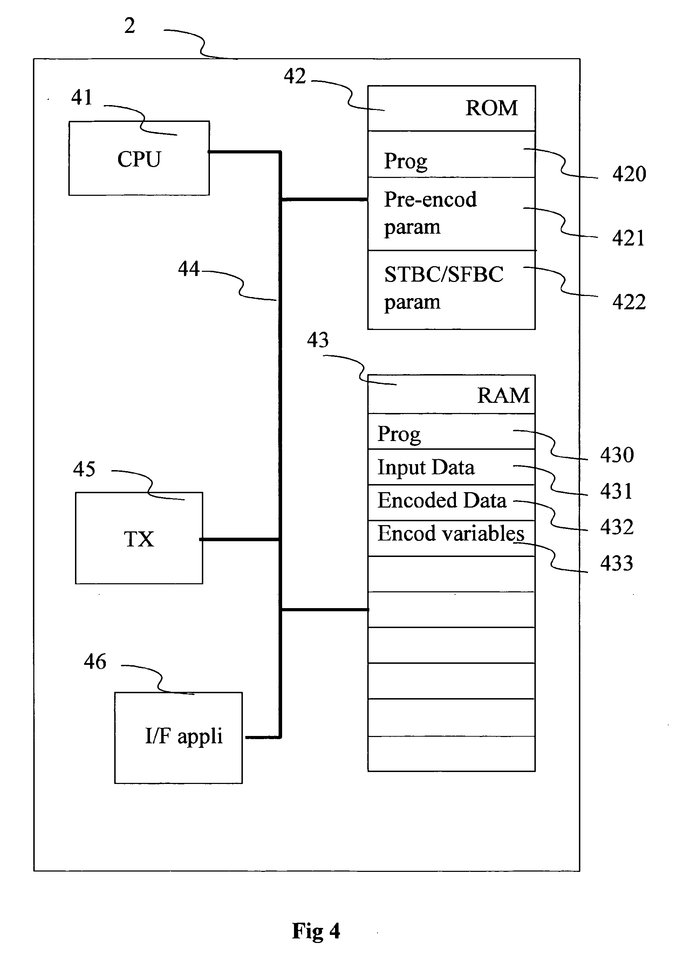

**Figure 4** represents an exemplary architecture of a transmitter 2.

Transmitter 2 comprises following elements that are linked together by a data and address bus 44:

- a microprocessor 41 (or CPU), which is, for example, a DSP (or Digital Signal Processor);
- a ROM (or Read Only Memory) 42;
- a RAM (or Random Access Memory) 43;
- an interface 46 for reception of data to transmit, from an application;
- a transmission module 45 (including RF part and antennas) for transmission of output signal on a wireless channel.

Each of these elements of figure 4 are well known by those skilled in the art and won't be disclosed further.

In each of mentioned memory, the word « register » used in the specification can correspond to area of small capacity (some bits) or to very large area (e.g. a whole program or large amount of received or decoded data).

ROM 42 comprises:

- a program 420;
- pre-encoder parameters 423 (such as clipping parameters, pre-filtering parameters and channel cancellation parameters); and
- STBC/SFBC parameters 424 (such as used STBC/SFBC code, number of antennas).

Algorithm of the transmission method according to the invention are stored in the ROM 42. When switched on, the CPU 41 uploads the program 420 in the RAM and executes the corresponding instructions.

RAM 43 comprises:

- in a register 430, the program executed by the CPU 41 and uploaded after switch on of the transmitter 2;
- input data in a register 431;
- encoded data in different state of the encoding method in a register 432; and
- other variables used for encoding in a register 433.

According to a variant of the invention, the digital part of the transmitter 2 is implemented in pure hardware configuration (e.g. in one or several FPGA, ASIC or VLSI with corresponding memory) or in a configuration using both VLSI and DSP.

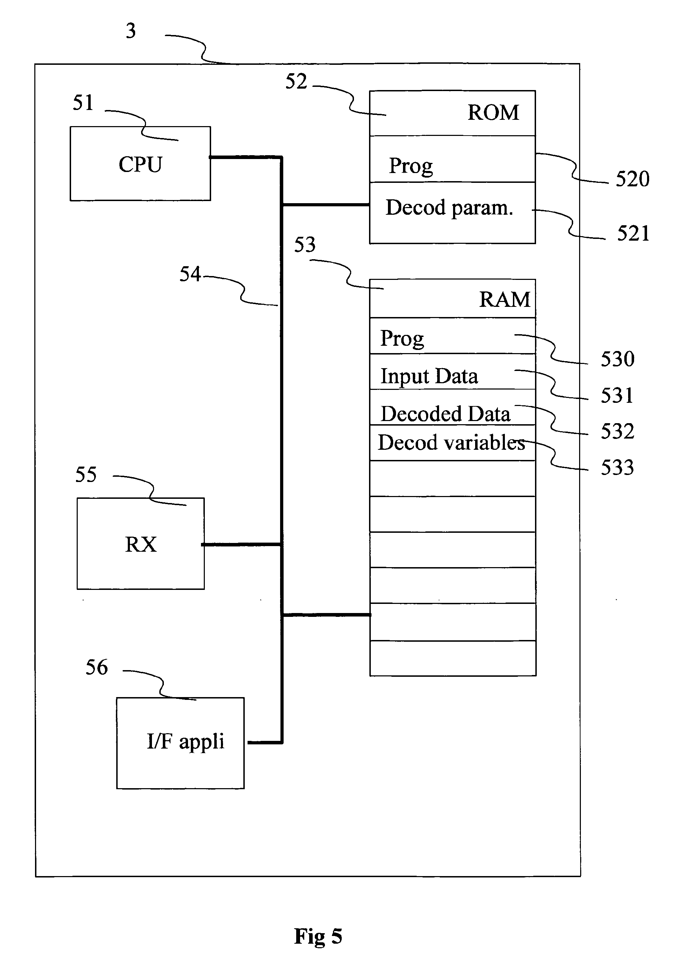

**Figure 5** represents an exemplary architecture of the receiver 3.

Receiver 3 comprises following elements that are linked together by a data and address bus 54:

- a microprocessor 51 (or CPU), which is, for example, a DSP (or Digital Signal Processor);
- a ROM (or Read Only Memory) 52;
- a RAM (or Random Access Memory) 53;

- a reception module 55 for reception of input signal and including antennas and RF part;
- an interface 56 for transmission of decoded data to an application.

Each of these elements of figure 5 are well known by those skilled in the art and won't be disclosed further.

ROM 52 comprises:

- a program 520; and
- decoding parameters 521 (such as used STBC/SFBC code, information representative of first and second constellations used in transmitter 2, number of reception antennas).

Algorithm of the reception method according to the invention are stored in the ROM 52. When switched on, the CPU 51 uploads the program 520 in the RAM and executes the corresponding instructions.

RAM 43 comprises:

- in a register 530, the program executed by the CPU 51 and uploaded after switch on of the receiver 3;
- input data in a register 531;
- decoded data in a register 532; and
- other variables used for decoding in a register 533.

According to a variant of the invention, the digital part of the receiver 3 is implemented in pure hardware configuration (e.g. in one or several FPGA, ASIC or VLSI with corresponding memory) or in a configuration using both VLSI and DSP.

**Figure 6** illustrates is a schematic view of the pre-encoder 23 in a case the dimension of the encoding method of Figure 5 equals 2. More generally, the architecture of pre-encoder 23 can be used in any MIMO transmitter, that does not implement channel correction or pre-filtering. Specifically, the pre-encoder 23 is compliant with any transmission system using $Ntx$ transmission antennas.

The pre-encoder 23 comprises:

- an STBC/SFBC encoder 60 (receiving, for example complex symbol data 22 and providing encoded complex symbols);
- $Ntx$ branches of FFT (Fast Fourrier Transform) and clipping, each branch comprising an IFFT (Inverse FFT) block (611 and 61$Ntx$ for the respectively 1st branch and $Ntx$th branch), a clipping block (respectively 621 and 62$Ntx$) and a FFT block (respectively 631 and 63Ntx) and receiving encoded symbols (e.g. 16QAM symbol) from the encoder 60;
- an STBC/SFBC decoder 64 receiving complex symbols from the $Ntx$ branches of FFT and clipping;
- a substractor 65 substracting the complex symbol data 22 from the output of the decoder 64;
- a multiplier 66 multiplying the result of the substraction made by substractor 65 by a value $K$;
- an additionner 67 additionning the result of multiplication made by multiplier 66 to the complex symbol data 22; and
- a projection block 68 projecting the result of the addition made by the addition 67 onto a constellation and providing the result 24 of the projection to the encoder 25.

The binary signal 20 has been modulated using digital modulation of e.g. QAM type and mapped into a symbol 22 to transmit. Each group of Q symbols 24 is encoded by the encoder 60 to form a STBC/SFBC codeword, which is a complex matrix of dimension $Ntx*N$ where $Ntx$ is the number of transmit antennas and $N$ is the time (resp. frequency) dimension of the STBC (resp. SFBC).

In each branch of FFT and clipping, the time domain signal is first obtained through an IFFT. The IFFT block (e.g. 611 or 61Ntx) computes an oversampled version of the time domain signal to increase the performances (especially to improve peak localization after IFFT and avoid peak regrowth in digital/analog conversion). According to a variant of the invention, no oversampled version of the time domain signal is computed

Time domain signal of each branch is then clipped in a clipping block (e.g. 621 or 62$Ntx$) using a fixed threshold.

Then, inverse processing of encoder 60 and IFFTs is applied. In each branch, the clipped time domain signal is put in the frequency domain in an FFT block (e.g. 631 or 63Ntx).

Then, a STBC/STFC decoding is applied to all the frequency domain clipped signal in the decoder 64.

Resulting QAM type symbols are then compared to the original ones: a correction signal is constructed by substracting the reference value from this result in substractor 65. In case some part of the signals should not be modified (e.g. reference or pilot signals (typically scattered pilots that are used for channel estimation)), then the corresponding correction signal is set to zero. This operation can be made on subconstrator, in multiplier 66 (with K equal to 0 for these specific parts) or in projection block 68. According to a variant of the invention, all the signal is modified.

The correction signal is then multiplied by a fixed gain $K$ and added to the reference signal. According to a variant a fixed gain $Ki$ is applied to each carrier $i$, where the gain applied to distinct carrier may be different or is different. The value of $K$ can be obtained by digital optimization. Contrary to Krongold and al cited in background art section, according to the invention, $K$ does not depend on the transmitted values. In particular, according to the invention, $K$ depends on the number of carriers, on the modulation, on the definition of the extended constellation, on the PAPR target and/or the possible increase of power transmission. Different values of $K$ according to the number of carriers enable to balance distortions of power in the spectrum, due to clipping. As illustrative example, with 1705 modulated carriers, a 64QAM constellation extended to a 81 constellation, a value of $K$ (used for all the modulated carriers) equal to 15 can be chosen. Advantageously, $K$ is in the range 10 to 25 depending on the allowed power increase.

The resulting constellation is then projected onto the allowed extended constellation set, the operation being made by the projection block 68.

According to the described embodiment, a non null value of $Ki$ is applied to all symbols associated with modulated carriers and symbols associated with carriers that are non modulated carriers (carriers not used to transmit data) are reset to zero after the pre-encoding process. According to a variant, all or some of symbols associated with non modulated carriers are multiplied by a non null factor $Ki$ in multiplier 66 and left unmodified by the projection block 68.

The resulting modified symbols 24 are then STBC/SFBC encoded by encoder 25. The transmitted signals are obtained through $Ntx$ IFFT.

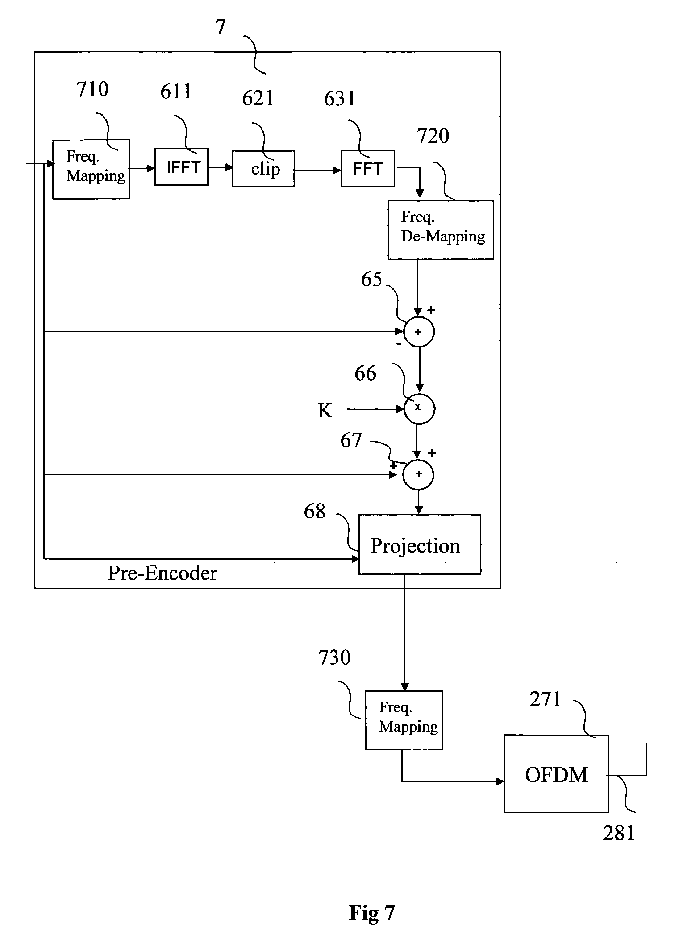

**Figure 7** illustrates is a schematic view of a pre-encoder 7 replacing the pre-encoder 23 according to another embodiment of the invention associated to a SISO (Single Input Single Output) transmission that uses one antenna at transmission and it well adapted to one antenna at reception..

The pre-encoder 7 comprises several elements that are similar to elements of pre-encoder 23 and have the same reference. The pre-encoder 7 comprises:

- a frequency mapper 710 that maps the input signal on a constellation;
- an IFFT block 611 receiving data from the mapper 710;
- a clipping block 621;
- an FFT block 631;
- a frequency demapper 720 receiving complex symbols from the FFT block 631;
- a substractor 65 substracting the complex symbol data 22 from the output of the demapper 720;
- a multiplier 66;
- an additionner 67; and
- a projection block 68.

The resulting modified symbols at the output of pre-encoder 7 are then transmitted to a frequency mapper 730 that is similar to the mapper 710 and to an OFDM modulator 271 and the corresponding antenna 281.

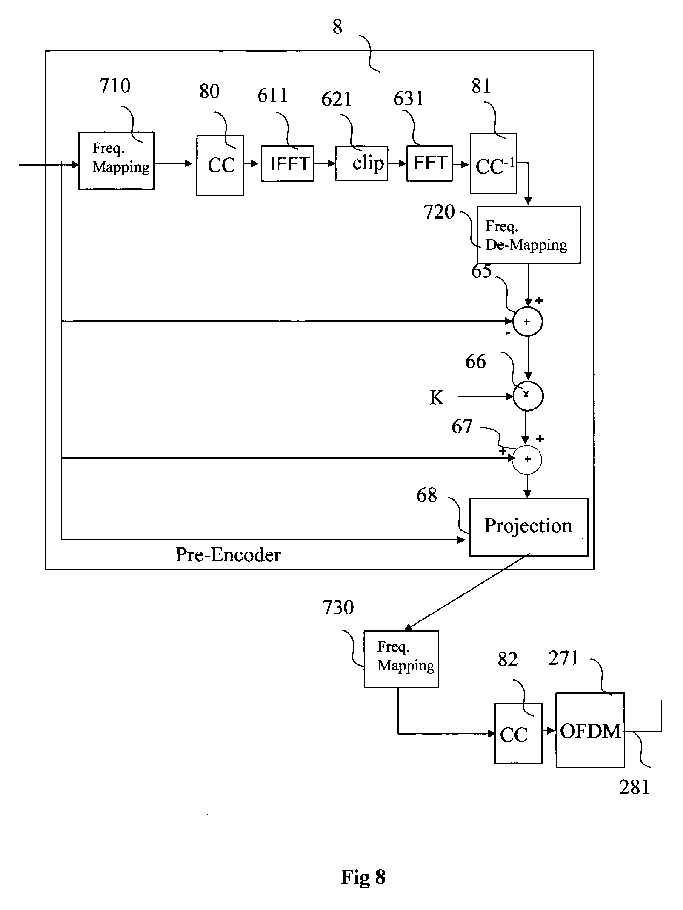

**Figure 8** illustrates a pre-encoder 8, which is a variant of pre-encoder 7. Pre-encoder 8 comprises channel correction. More precisely, a channel correction block 80 is inserted before the IFFT block 611; a reverse channel correction block 81 is inserted after the FFT block 631. Another channel correction block 82 is inserted before the modulator block 271 or between the modulator block 271 and antenna 281. The channel correction compensates the linear distortions due to the transposition, amplification and filtering in antenna block 281. The channel correction block modifies the frequency domain signal by applying a complex multiplication to each transmitted carrier signal by a correction factor depending on each transmitted carrier. The reverse channel correction block 81 corresponds to the reverse operation (multiplication by the corresponding inverse factor). The block 81 reproduces the linear distortions of the antenna block 281.

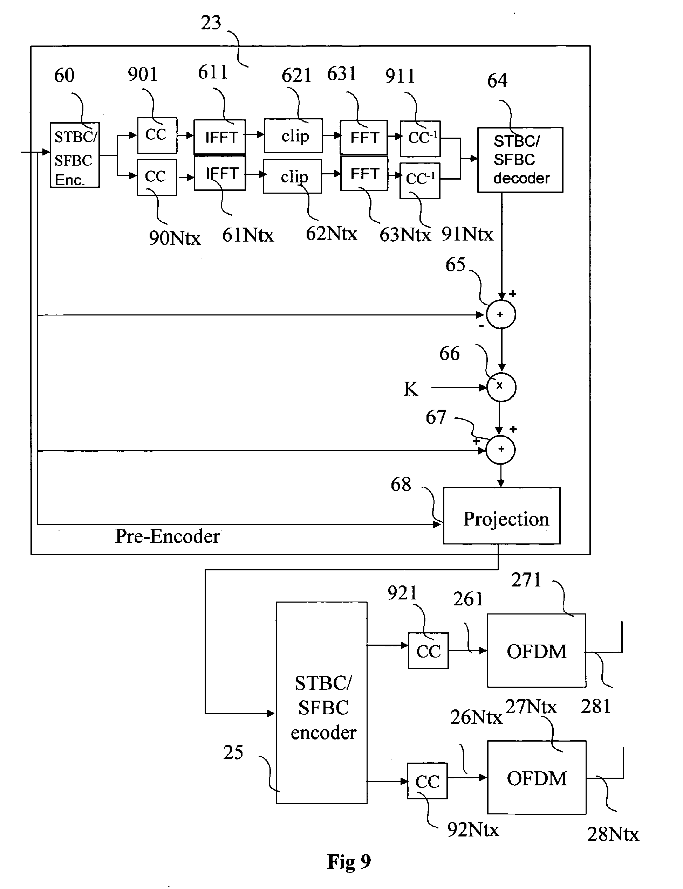

**Figure 9** illustrates a pre-encoder 9, which is a variant of pre-encoder 23. Pre-encoder 9 comprises channel correction. More precisely, a channel correction block 90i ($i$ = 1..$Ntx$) is inserted before the IFFT block 61$i$; a reverse channel correction block 91$i$ is inserted after each FFT bloc 63i. Another channel correction block 92i is inserted before each modulator block 27$i$ or between the modulator block 27$i$ and corresponding antenna 28i. Each channel correction 901 to 90NTx compensates the linear distortions due to the transposition, amplification and filtering in corresponding antenna blocks 281 to 28Ntx. Each channel correction block modifies the frequency domain signal by applying a complex multiplication to each transmitted carrier signal by a correction factor depending on each transmitted carrier and on antenna block. Each reverse channel correction block 911 to 91 NTx corresponds to the reverse operation (multiplication by the corresponding inverse factor). The block 91 i reproduces the linear distortions of the antenna block 28i.

According to another variant compliant with each of embodiments of figures 6 to 9, a pre-filtering module 10 is inserted between an FFT block 61$i$ ($i$=0 for a single branch embodiment and $i$=1..$Ntx$ for MIMO embodiments) and a clipping block 621.

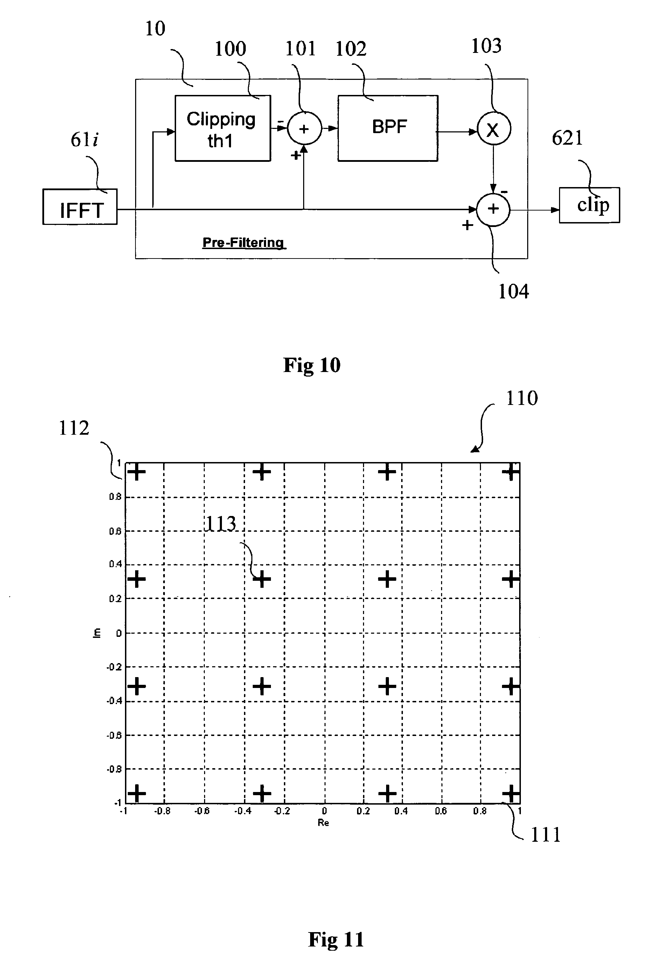

The pre-filtering module described in **figure 10** comprises:

- a clipping block 100 receiving signal from IFFT block 61$i$ and clipping the received signal according to a given threshold;

- a substractor 101 substracting the result of clipping block 100 from the output of IFFT block 61i;
- a band pass filter 102 connected to output of substractor 101, the band pass part of filter 102 being outside the useful bandwidth (the parameter of which can be optimized through simulation);
- a multiplier 103 that multiplies complex samples by a real constant (the multiplier enabling a gain, the value of which can be optimized by simulation);
- a substractor 104 substracting the result of multiplier 103 from the output of IFFT block 61i and providing a filtered signal to clipping block 621.

The pre-filtering module 10 enables to attenuate at least partially the peak power by adding energy outside the useful bandwidth while inducing minimal distortions within this useful bandwidth. The pre-filtering block is applied before clipping 621.

Examples associated to constellations used in the pre-encoder 23 are given and the following notations are used to have a better understanding of the signals in the pre-encoder 23:

- **C** and **S** have the same meaning as above;
- **m(.)** denotes the mapping operation onto $N_{fft}$ points sequences;
- $c_l(.)$ denotes the clipping operation
- $p_1(.)$ denotes the projection operation onto allowed extension directions
- $p_2(.)$ denotes the projection onto a extended constellation
- **F** is the $N_{fft}$ points discrete Fourrier transform matrix

Signal 22 associated to **S** entering the encoder 60 is illustrated by the constellation 110 on **figure 11**. The points of the constellations represented here (that corresponds to discrete modulated symbols) and in other drawings are in complex plane and are illustrated according to their real part on axis 111 and their imaginary part on axis 112. The constellation 110 is a regular 16 QAM (Quadrature Amplitude Modulation) and comprises 16 points 113 regularly mapped.

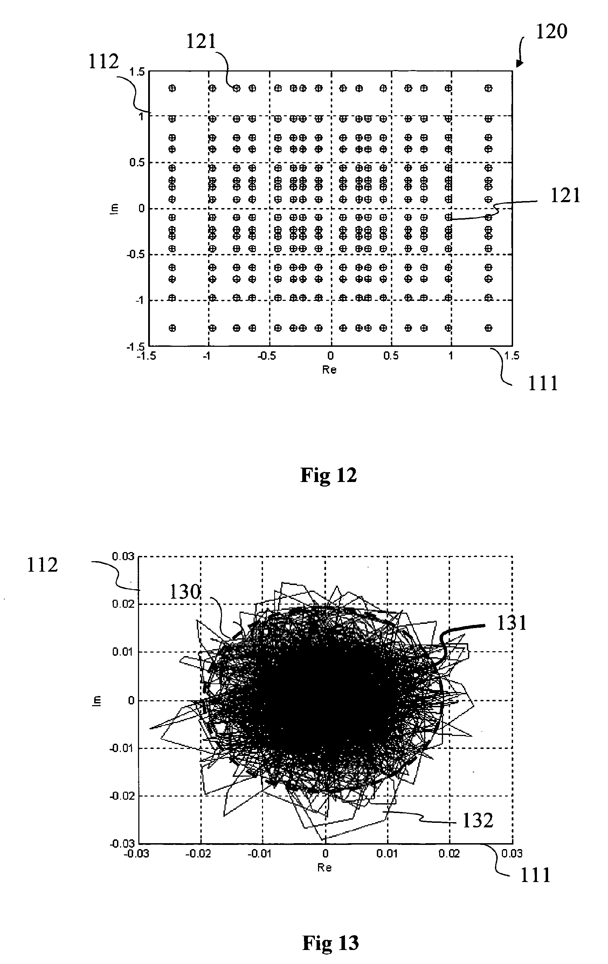

Encoded signal after encoder 60 corresponds to a STBC/SFBC encoded constellation 120 and is illustrated on **figure 12**. It corresponds to **CS** after application of a 2x2 Golden Code to signal **S**. The constellation 120 comprises more that 16 points 121 and the mapping of these points depends on the STBC/SFBC code and may be irregular.

**Figure 13** illustrates an encoded STBC/SFBC signal before (signal 132 between IFFT block 61i (i being 0, 1 .. or NTx) and clipping block 62i (i being 0, 1 .. or NTx)) and after (signal 131 after clipping block 62i) clipping in the time domain according to according to its real part on axis 111 and their imaginary part on axis 112. A circle 130 in dotted line represents the limit for the clipping: when the amplitude of the STBC/SFBC signal 132 is too high, this signal being beyond the circle 130, then the signal 132 is clipped; when the amplitude of the STBC/SFBC signal 132 is not too high, this signal 131 being inside the circle 130, then the signal 131 is kept as such. Then, the signal 131 after clipping is inside the circle 130. In other terms, the amplitude of signal 131 is lower than or equal to a maximum value associated to the radius of circle 130.

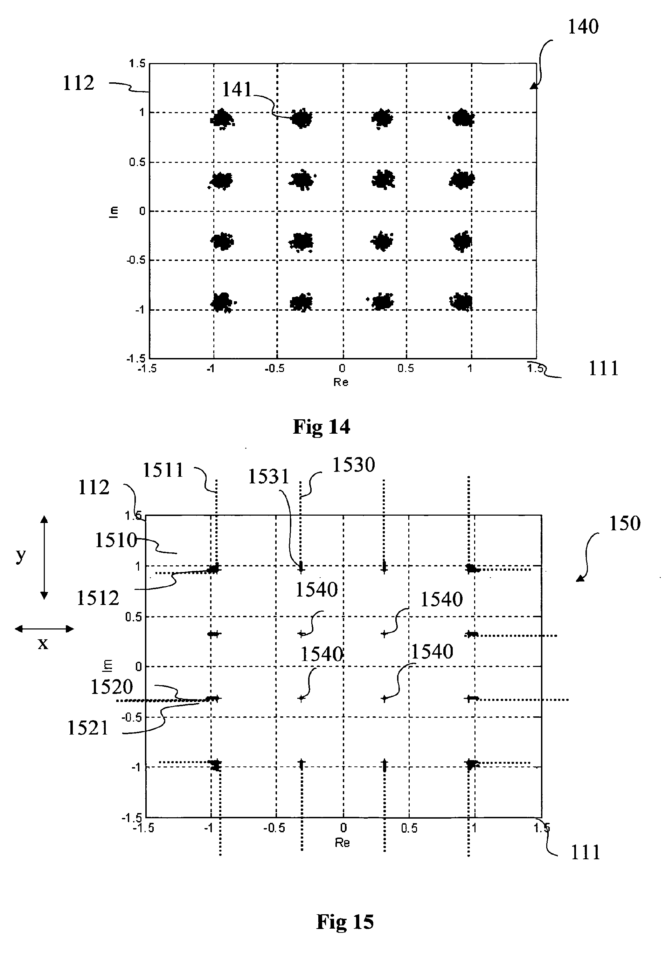

**Figure 14** illustrates a modified QAM symbol constellation 140 after STBC/SFBC decoder 64. This signal is distorted compared to constellation 110 of figure 11. For instance, a point is now distorted and corresponds to an area 141 of the constellation 140.

**Figure 15** illustrates a constellation 150 after projection 68. Points 1540 in the middle of the constellation corresponds to points of constellation 110 that are not allowed to be modified as defined by projection 68 rules. Only useful extensions are kept. Here the constellation 150 is not discrete. The points on the corner are extended towards the quarter that is the further of the center of the constellation. Eg. the signal is kept as such in area 1510 corresponding to top left corner; the signal corresponding to the top left point and that is below the horizontal line 1512 to which the top left point belongs is projected on this line according a vertical direction y; the signal corresponding to the top left point and that is on right the vertical line 1511 to which the top left point belongs is projected on this line according to an horizontal direction x. The points on the border that are not on the corner are extended to a direction perpendicular to the border. Then, the signal 1531 corresponding to a point on top border that is not on the corner is projected on a vertical line 1530 extended from this point, according to a horizontal direction x. A signal 1521 corresponding to a point on left border that is not on the corner is projected on a horizontal line 1520 extended from this point, according to a vertical direction y. More generally, decision areas are defined by borders that correspond to vertical and horizontal lines going through point of the constellation 110 (with no distortion); in decision areas that comprise only one point of the constellation 110, the signal remain unchanged; in decision areas that comprises four points of the of the constellation 110, the signal is projected on the closest point; in decision areas that comprises two points of the constellation, the signal is projected on the lines extending from these points.

As summary, we can associate an extension mask to each point of the constellation 110:

- the extension mask of a point, which is not on the border of the constellation 110, corresponds to the point itself;
- the extension mask of a corner point corresponds to the quarter that is the further to the center of constellation 110;
- the extension mask of a point on the vertical borders of constellation outside corners corresponds to a line starting at the considered point and extending in the horizontal direction x towards the outside of constellation; and
- the extension mask of a point on the horizontal borders outside corners corresponds to a line starting at the considered point and extending in the vertical direction *y* towards the outside of constellation.

After additionner 67, a point is projected on the extension mask of the corresponding point before frequency mapping 710 according to horizontal direction x and/or vertical direction y.

Then, if a point of constellation 110 before frequency mapping 710 is not on border, then this point is kept as such.

If a point of constellation 110 before frequency mapping 710 is a corner point, the result of projection depends on the position of the corresponding point after additionner 67:

- if the corresponding point is inside the associated quarter that is the closest from the center of constellation, then, the corresponding point after additionner is projected on the corresponding corner point;
- if the corresponding point is inside the associated quarter that is the furthest from the center of constellation, then, the corresponding point after additionner is kept as such;
- else, if the corresponding point is projected on the border of the quarter that is the furthest from the center of constellation according to a horizontal or vertical direction depending on the position of the corresponding point.

If a point of constellation 110 before frequency mapping 710 is on the border of the constellation and is not a corner, the result of projection depends on the position of the corresponding point after additionner 67:

- if the corresponding point is inside the associated half plane (defined by the border of constellation comprising the point of constellation before frequency mapping 710) that comprises the center of constellation, then the corresponding point after additionner is projected on the corresponding point;
- else, then, the corresponding point after additionner is projected on the half line of mask starting at the considered point of constellation according to a horizontal or vertical direction depending on the position of the corresponding point.

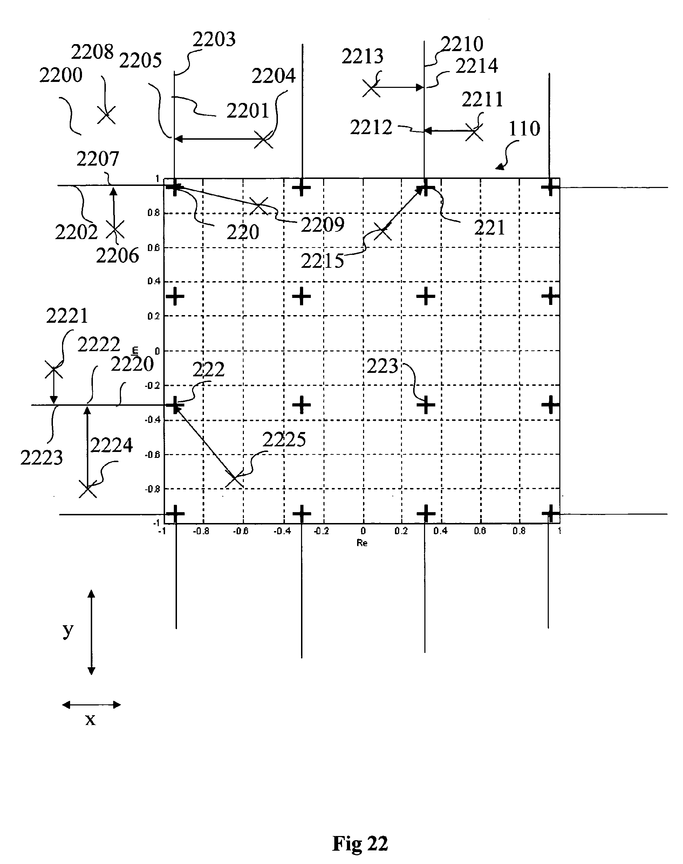

**Figure 22** illustrates extension masks (or extended regions) associated to some points of basic constellation 110.

First, the corner point 220 of basic constellation 110 is considered. The extended mask 2200 associated to point 220 corresponds to the top left corner and is bounded by half-lines 2202 and 2203 starting at point 220 and extending along respective directions *x* and *y* towards the outside of constellation area. Points 2204, 2208, 2206 and 2209 represent points associated to point 220 at the output of additioner 67, i.e. after amplification of the differences between the modified constellation signal and the basic constellation point 220 with a fixed value. Point 2209 inside the constellation area is projected on point 220. Point 2208 inside the extended make 2200 is kept as such. Point 2204 on left of border 2203 is projected on point 2205 belonging to the border 2203. Point 2206 below border 2202 is projected on point 2207 belonging to the border 2202.

Now, point 221 of basic constellation 110 and situated on top border of constellation 110 is considered. The extended mask 2210 associated to point 221 corresponds to the half-line starting at point 221 and extending along direction *y* towards the outside of constellation area. Points 2211, 2213 and 2215 represent points associated to point 221 at the output of additioner 67, i.e. after amplification of the differences between the modified constellation signal and the basic constellation point 221 with a fixed value. Point 2215 inside the constellation area is projected on point 221. Point 2213 on left of border 2210 is projected on point 2214 belonging to the border 2210. Point 2211 on right of border 2210 is projected on point 2212 belonging to the border 2210.

Now, point 222 of basic constellation 110 and situated on left border of constellation 110 is considered. The extended mask 2220 associated to point 222 corresponds to the half-line starting at point 222 and extending along direction x towards the outside of constellation area. Points 2221, 2224 and 2225 represent points associated to point 222 at the output of additioner 67, i.e. after amplification of the differences between the modified constellation signal and the basic constellation point 222 with a fixed value. Point 2225 inside the constellation area is projected on point 222. Point 2221 above border 2210 is projected on point 2223 belonging to the border 2220. Point 2224 below border 2220 is projected on point 2222 belonging to the border 2220.

Finally, point 223 of basic constellation 110 and that is not on the border of constellation 110 is considered. The extended mask associated to point 223 is limited to this point. Then, any point associated to basic constellation point 223 at the output of additionner 67 is projected on the point 223 itself. Then, as a variant of the invention, the projection of points corresponding to a mask limited to a point (i.e. when basic points are not on borders of basic constellation) can be made directly after decoder 64 without computation and amplification of differences between modified constellation signal and the basic constellation point.

As summary, if the considered point before projection is inside the extension mask associated to the original point of constellation 110. Else, it is projected on the extension mask of the original point of constellation 110 following horizontal direction *x* and vertical direction *y*.

The embodiment corresponding to constellation 150 is well adapted to SISO implementation as SISO decoder can take profit of all information.

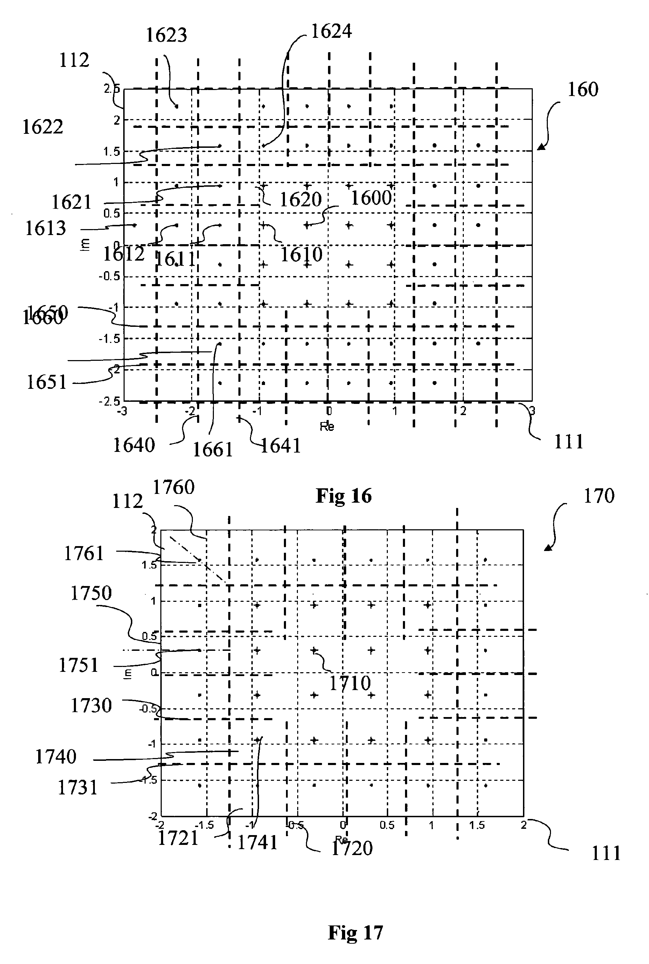

**Figure 16** illustrates a discrete constellation 160 at the output of projection block 68, according to a variant of the invention. The major difference between constellation 160 and 150 is that the constellation 160 is discrete. Then, an extension mask associated to a point before frequency mapping corresponds to the intersection of the extension mask as described in association to figure 15 and discrete constellation 160. First an extended constellation is defined. The extended constellation correspond the original constellation 110 that is extended in horizontal and vertical direction in a regular way (the points (e.g. 1600, 1610, 1620, 1611-1613, 1621-1623, 1661) of the extended constellation are regularly spaced, with the same space as the original constellation 110). According to a specific embodiment, the projection can be a two-step projection; in a first step, a point can be projected on a non-discrete mask as disclosed in view of figure 15. Then, on a second step, the result of the first step projection is discretised according to a decision area surrounding each point of the discrete extended constellation. For a given original point, decision areas for are bordered by median vertical lines (e.g. 1640 or 1641) of extended constellation and median horizontal lines (e.g. 1650 or 1651) of extended constellation. Signal in a decision area is projected on the center point of the decision area (e.g. signal in decision area 1660 is projected on center point 1661). The extended constellation has no limit. This embodiment is especially well adapted to a lattice decoder. According to a variant, the two step projection is combined in a single step projection with the same projection function.

**Figure 17** illustrates a discrete constellation 170 at the output of projection block 68, according to a variant of the invention. The major difference between constellation 170 and 160 is that the size of the constellation is limited. Advantageously, the extended constellation 170 is limited to a maximum number (e.g. 1, 2, 3) of point ranks in all direction compared to constellation 110 to limit the complexity of the decoder. According to a particularly advantageous embodiment, the extended constellation 170 is limited to one point rank in all direction compared to constellation 110 as illustrated on figure 17: the constellation 170 is a 6x6 constellation. The decision areas (e.g. 1750) on the border of constellation 170 are not limited in a direction extending from the center of constellation 170. In each decision area, the signal is projection on the corresponding point of the constellation 170: this point is on the center for limited decision areas (e.g. point 1741 of decision area 1740) and on the median line for other decision areas (e.g. point 1741 of decision area 1740. The use of constellation 170 is well adapted to a decoder of limited complexity. It enables also a small increase of mean power of transmission.

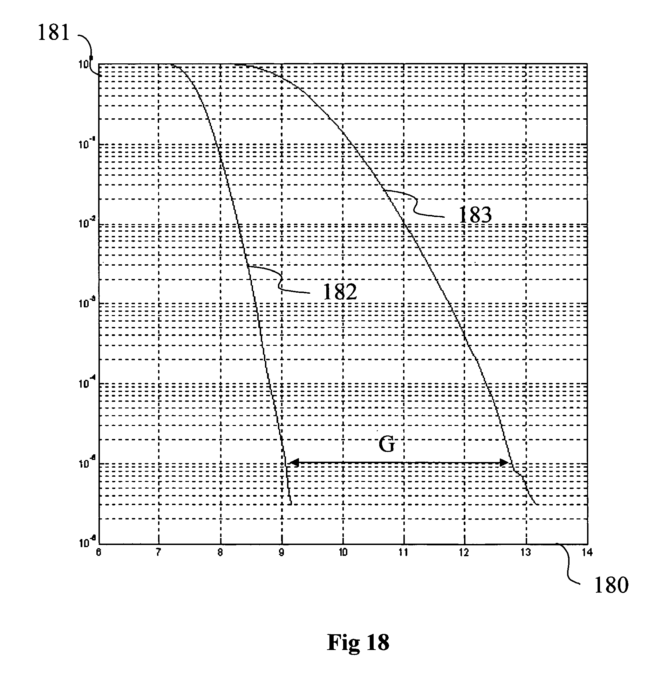

**Figure 18** illustrates the distribution 181 of probability of PAPR according to PAPR 180 in dB. Curves 182 and 183 correspond respectively to invention and to prior art in a MIMO context using 16QAM modulation with a projection 68 corresponding to constellation 160. The gain G of PAPR is about 4dB for a probability around $10^{-5}$. In this example, neither channel correction nor prefiltering are applied.

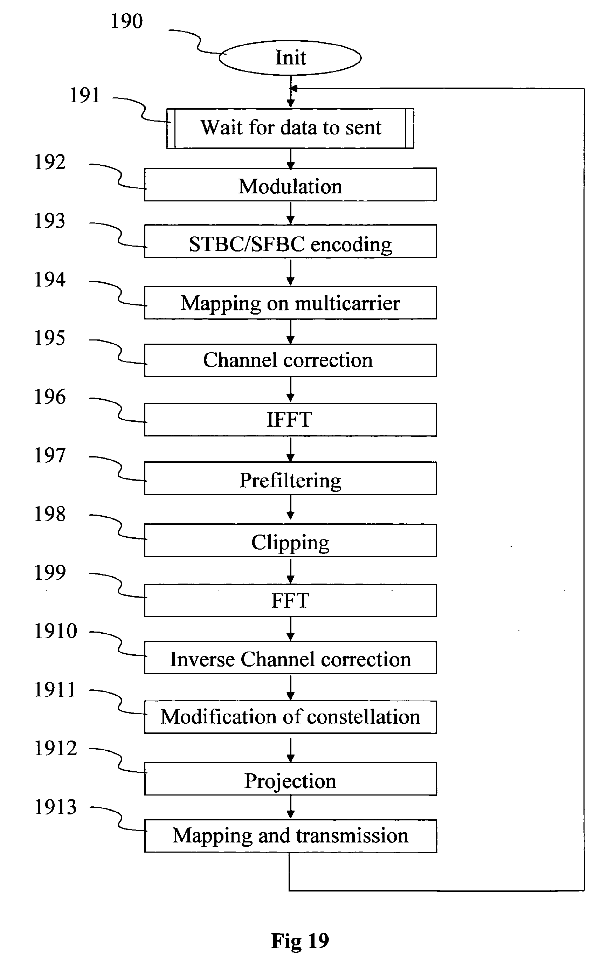

**Figure 19** represents a specific embodiment of the transmission method according to the invention, the method being implement the transmitter 2.

The transmission begins with an initialization step 190, wherein different parameters of the method are set to their initial value(s).

Then, during a step 191, the transmitter 2 waits for and receives a signal to transmit.

Then, during a step 192, the incoming signal is modulated.

Then, during a step 193, in case of MIMO transmission, the modulated signal is STBC/SFBC encoded.

Then, the signal is mapped on a multi-carrier in a step 194.

Then, during an optional step 195, channel correction is applied to time signal.

Then, IFFT is applied to mapped signal in a step 196.

Then, during an optional step 197, the signal is pre-filtered.

Then, during a step 198, the signal is clipped.

Then, during a step 199, FFT is applied to clipped signal.

Then, if step 196 was applied, during a step 1910, a reverse channel correction is applied.

Then, the constellation is modified in a step 1911.

Then, during a step 1912, the signal is projected.

Finally, during a step 1913, the projected signal is mapped and transmitted on a wireless channel. After step 1913, step 191 is reiterated.

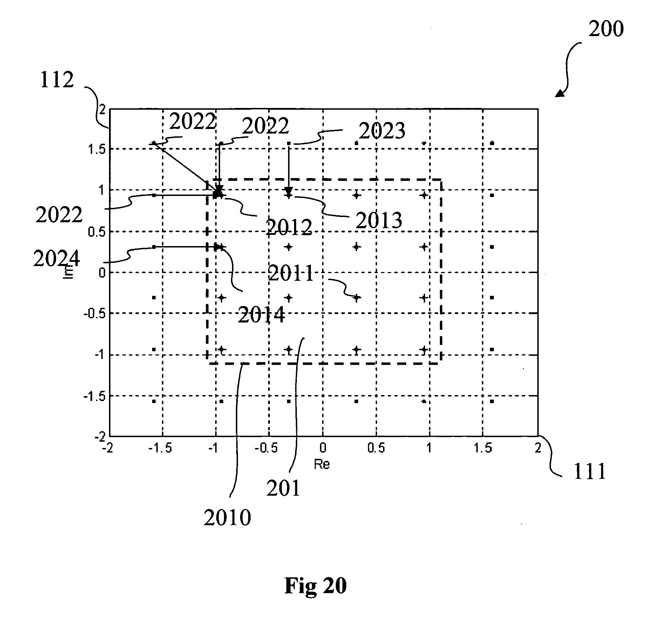

**Figure 20** illustrates a constellation 200 in the receiver 3. Lattice decoder advantageously assumes an extended constellation corresponding to the output of projection block 68. Lattice decoding algorithm (such as, for example, Schnorr-Euchner decoding algorithm) advantageously makes assumptions about transmitted points. On figure 20, it is assumed that the transmitted signal corresponds to extended constellation of figure 17. More generally, the decoder implementation is adapted to the transmission configuration. On figure 17, the output of projection block 68 is a 6x6 QAM extended constellation. Then, the lattice decoder considers the same extended constellation and it outputs points belonging to such an extended constellation (such as points 2011-2014, 2022-2024). The demodulator 37 converts the extended constellation signal into a basic constellation signal that corresponds to an estimation of the output of modulator 21 or directly to a binary signal corresponding to an estimation of the input of modulator 21.

In the example of figure 20, points 2011-2014 of 16QAM basic constellation are inside an area 201 with border 2010. Points 2022-2044 of extended constellation outside the area 201 are assigned by demodulator 21 to the closest point of basic constellation. Then, points 2022, 2023, 2024 are assigned respectively assigned to points 2012, 2013 and 2014. According to a variant, the demodulation is directed and points of extended constellation are assigned by demodulator 21 to decoded bits (e.g. with a look-up table).

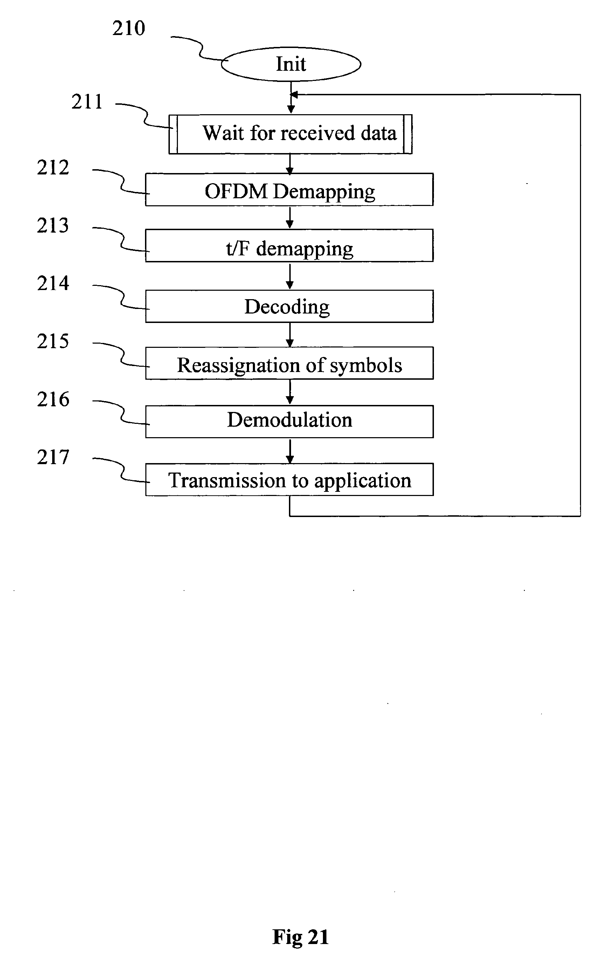

**Figure 21** represents a specific embodiment of the reception method according to the invention, the method being implement the receiver 3.

The reception begins with an initialization step 210, wherein different parameters of the method are set to their initial value(s).

Then, during a step 211, the receiver 3 waits for and receives a signal transmitted by transmitter 2 over a wireless channel.

Then, during a step 212, the incoming signal is demapped (OFDM demapping).

Then, during a step 213, the demapped signal is time/frequency demapped.

Then, during a step 214, the resulting signal is decoded assuming an extended constellation has been generated at the transmitter side (e.g. by Schnorr-Euchner algorithm).

Then, during a step 215, symbols of extended constellation are reassigned on a basic constellation.

Then, during a step 216, the signal is de-mapped to provide a binary signal and transmitted to an application in a step 217. After step 217, step 211 is reiterated.

According to a variant of invention, steps 215 and 216 can be merged into one step (direct de-mapping from extended constellation).

Of course, the invention is not limited to the embodiments described above.

The invention is compatible with any type of wireless link (point to point links, wireless LANs, mobile networks, digital broadcasting, satellite communication, ...). The disclosed transmitter in figure 3 and receiver in figure 4 comprise then elements adapted to a specific application (such as front end, modulator or demodulator, MAC layer interface, and all other usual communication layer elements). The invention is especially well adapted to the transmission and reception of Digital Video Broadcasting (or DVB (e.g. DVB-T (terrestrial), DVB-H (handheld)..). In this case, the discrete multidimensional coded signal comprises data representative of a digital video broadcast signal.

The invention is advantageously used in high spectral efficiency wireless transmission (MIMO system and/or nQAM modulation), and, in particular, high rate transmission. Indeed, the invention can be used for other transmission (eg. nQPSK modulation, ...).

According to MIMO decoding according to the invention, the receiver decodes a signal that has been space time encoded and transmitted with at least two antennas. The space time encoding can be based on a space time block code. According to a variant, the space time encoding is a simple spatial multiplexing; then, the code matrix C is the identity matrix.

**Claims**

**1.** Method of coding of an input data, **characterised in that** it comprises :

- mapping (21, 192) of input data on a basic constellation (110);
- mapping (60, 710, 193) of input data on multiple carriers to generate a frequency domain symbol per transmit antenna to generate multi-carrier signals;
- generation (611, 61 Ntx, 196) of time domain multicarrier signals;
- clipping (621, 198) of time domain multicarrier signals with a fixed threshold to get modified time domain symbols;
- generation (631, 63Ntx, 199) of frequency domain modified signal;
- de-mapping (64, 720) of frequency domain modified signal to generate modified constellations;
- amplification (65, 66, 67, 1911) of the difference (65) between the modified constellation signal and the basic constellation with a fixed value for each carrier independent of input data to get a resulting frequency domain signal;
- projection (68, 1912) of the resulting frequency domain signal on extended region associated to point of corresponding basic constellation to get a resulting frequency domain signal;

- generation (271, 27NTx, 1913) of the resulting time domain signal.

2. Method of coding according to claim 1, **characterized in that** a fixed value (K) of amplification is associated to each carrier.

3. Method of coding according to any of claims 1 and 2, **characterized in that** the projection is made on a discrete extended constellation (160, 170) to get a resulting discrete frequency domain signal.

4. Method of coding according to any of claims 1 and 2, **characterized in that** the projection is made on a projection area that is not a discrete extended constellation (150) to get a resulting discrete frequency domain signal.

5. Method of coding according to any of claims 1 to 4, **characterized in that** the projection area (170) is limited by a bound.

6. Method of coding according to any of claims 1 to 5, **characterized in that** it includes:

- the mapping (21) of input data on a basic constellation;
- a space/time or space/frequency coding (60) of mapped data;
- the mapping of input data on multiple carriers (60) applied to space/time or space/frequency coded mapped data to generate a frequency domain symbol per transmit antenna to generate multi-carrier signals;
- generation (611, 61 Ntx) of time domain multicarrier signals;
- clipping (621) of time domain multicarrier signals with a fixed threshold to get modified time domain symbols;
- generation of frequency domain modified signal;
- a space/time or space/frequency decoding (631, 63Ntx) of frequency domain modified signal to get a modified mapped data;
- de-mapping (64) of frequency domain modified signal to generate modified constellations;
- amplification 65, 66, 67) of the difference (65) between the modified constellation signal and the basic constellation with a fixed value for each carrier independent of input data to get a resulting frequency domain signal;
- projection (68) of the resulting frequency domain signal on extended region associated to point of corresponding basic constellation to get a resulting frequency domain signal;
- a space/time or space/frequency coding (25) of resulting frequency domain signal;
- generation (271, 27NTx) of the resulting time domain signal.

7. Method of coding according to any of claims 1 to 6, **characterized in that** it includes a filtering (10) of time domain OFDM signals, the clipping of time domain signals being applied to filtered time domain signals.

8. Method of coding according to any of claims 1 to 7, **characterized in that** it includes:

- a channel correction of multi-carrier signals, the generation (611, 61 Ntx) of time domain multicarrier signals with IFFTs being applied each to frequency domain symbol of the multi-carrier signals of time domain multicarrier signals after channel correction;
- a reverse channel correction of frequency domain modified signals, the de-mapping (64, 720) of frequency domain modified signal being applied after reverse channel correction.

9. Method of decoding a received signal, **characterized in that** the received signal corresponds to a transmitted signal that has been obtained by mapping input data on a basic constellation and on multiple carriers to generate a frequency domain symbol per transmit antenna to generate multi-carrier signals and transmission on a signal after projection of the a continuous frequency domain signal on extended region associated to point of corresponding basic constellation;

and **in that** the method of decoding comprises:

- a decoding step (214) providing an estimation of transmitted signal on extended constellation associated to extended region to provide an extended decoded signal; and
- an assignation (215) of symbols of extended decoded signal on symbols of basic constellation.

1

1001

1000

1002

**Fig 1**

2

20   21   23   25   261   271

Mod → Pre-Encoder → STBC/SFBC encoder → OFDM

22   24   26Ntx   27Ntx   281

OFDM

28Ntx

**Fig 2**

**Fig 3**

**Fig 4**

**Fig 5**

23

60　　　　611　　　621　　　631　　　64

STBC/
SFBC
encoder

IFFT

IFFT

61Ntx

clip

clip

62Ntx

FFT

FFT

63Ntx

STBC/
SFBC
decoder

65

+
+
-

66

K ——→ ×

67

+
+
+

68

Projection

Pre-Encoder

**Fig 6**

7

710    611    621    631    720

Freq.
Mapping → IFFT → clip → FFT

Freq.
De-Mapping

65

+
+ (⊕)
-

66

K → (×)

67

+ (⊕) +

68

Projection

Pre-Encoder

730

Freq.
Mapping

271

OFDM

281

**Fig 7**

8

710     80     611     621     631     81

| Freq. Mapping | → | CC | → | IFFT | → | clip | → | FFT | → | CC⁻¹ |

720

Freq. De-Mapping

65

$+$

$+$

$-$

66

K   →   $\times$

67

$+$   $+$

68

Projection

Pre-Encoder

730

Freq. Mapping

82     271

CC  →   OFDM

281

**Fig 8**

**Fig 9**

**Fig 10**

**Fig 11**

**Fig 12**

**Fig 13**

**Fig 14**

**Fig 15**

**Fig 16**

**Fig 17**

**Fig 18**

190

Init

191 — Wait for data to sent

192 — Modulation

193 — STBC/SFBC encoding

194 — Mapping on multicarrier

195 — Channel correction

196 — IFFT

197 — Prefiltering

198 — Clipping

199 — FFT

1910 — Inverse Channel correction

1911 — Modification of constellation

1912 — Projection

1913 — Mapping and transmission

**Fig 19**

**Fig 20**

210

Init

211

Wait for received data

212

OFDM Demapping

213

t/F demapping

214

Decoding

215

Reassignation of symbols

216

Demodulation

217

Transmission to application

**Fig 21**

**Fig 22**

## EUROPEAN SEARCH REPORT

**European Patent Office**

**Application Number**

EP 07 30 1024

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 99/53663 A (MOTOROLA INC [US]) 21 October 1999 (1999-10-21) * page 4, line 17 - line 26 * * page 5, line 21 - page 6, line 11 * * page 12, line 16 - line 19 * * figure 3 * | 9 | INV. H04L27/26 H04L27/34 |
| A | US 2007/089015 A1 (SAUL ANDREAS [DE]) 19 April 2007 (2007-04-19) * page 4, paragraph 45 - paragraph 46 * * figures 5,6 * | 1-3,5-7 | |
| A | THOMAS T A ET AL: "Papr Reduction for Beamforming Ofdm Transmitters" ACOUSTICS, SPEECH AND SIGNAL PROCESSING, 14 May 2006 (2006-05-14), - 19 May 2006 (2006-05-19) pages 289-292, XP010931039 PISCATAWAY, NJ, USA,IEEE ISBN: 1-4244-0469-X * page 290, last paragraph - page 291, column 2 * | 1,4,6 | |
| A | REDDY H ET AL: "Space-Time Coded OFDM with Low PAPR" IEEE GLOBAL TELECOMMUNICATIONS CONFERENCE, vol. 7 OF 7, 1 December 2003 (2003-12-01), - 5 December 2003 (2003-12-05) pages 799-803, XP010678175 NEW YORK, NY : IEEE, US ISBN: 0-7803-7974-8 * page 800, column 2 * * figure 3 * | 1,6,8 | |

**TECHNICAL FIELDS SEARCHED (IPC)**

H04L
H03G

-/--

The present search report has been drawn up for all claims

| Place of search | Date of completion of the search | Examiner |
|---|---|---|
| The Hague | 30 October 2007 | Moreno, Marta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

**EP 1 990 964 A1**

**European Patent Office**

# EUROPEAN SEARCH REPORT

Application Number

EP 07 30 1024

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DEUMAL M ET AL: "Peak Reduction of Multi-Carrier Systems by Controlled Spectral Outgrowth" ACOUSTICS, SPEECH AND SIGNAL PROCESSING, 14 May 2006 (2006-05-14), - 19 May 2006 (2006-05-19) pages 317-320, XP010931046 PISCATAWAY, NJ, USA,IEEE ISBN: 1-4244-0469-X section 2.1.<br><br>----- | 1 | |

TECHNICAL FIELDS SEARCHED (IPC)

The present search report has been drawn up for all claims

| Place of search | Date of completion of the search | Examiner |
|---|---|---|
| The Hague | 30 October 2007 | Moreno, Marta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

32

## ANNEX TO THE EUROPEAN SEARCH REPORT
## ON EUROPEAN PATENT APPLICATION NO.

EP 07 30 1024

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2007

| Patent document cited in search report | | Publication date | Patent family member(s) | | Publication date |
|---|---|---|---|---|---|
| WO 9953663 | A | 21-10-1999 | AU | 739896 B2 | 25-10-2001 |
| | | | AU | 3487199 A | 01-11-1999 |
| | | | BR | 9909560 A | 26-03-2002 |
| | | | CA | 2328098 A1 | 21-10-1999 |
| | | | CN | 1296689 A | 23-05-2001 |
| | | | EP | 1068707 A1 | 17-01-2001 |
| | | | JP | 2002511708 T | 16-04-2002 |
| | | | MX | PA00009895 A | 24-04-2002 |
| US 2007089015 | A1 | 19-04-2007 | NONE | | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 06301039 A
- EP 06301038 A
- EP 06301041 A
- EP 06301223 A

### Non-patent literature cited in the description

- **B.S. KRONGOLD ; WOO ; JONES.** Fast Active Constellation Extension for MIMO-OFDM PAR Reduction. *conference records of the 39th Asilomar conference on signals, systems and computers,* 2005
- **CRISTINA CIOCHINA ; FABIEN BUDA ; HIKMET SARI.** An Analysis of OFDM Peak Power Reduction Techniques for WiMAX Systems. *SEQUENS Communications White Paper*
- **J.-C. BELFIORE ; G. REKAYA ; E. VITERBO.** The Golden Code: A 2 x 2 Full-Rate Space-Time Code with Non-Vanishing Determinants. *IEEE Transactions on Information Theory,* April 2005, vol. 51 (4), 1432-1436
- **V.TAROKH ; H. JAFARKHANI ; R. A. CALDERBANK.** Space-Time block codes from orthogonal designs. *IEEE Transactions on Information Theory,* July 1999, vol. 45, 1456-1467
- **E. VITERBO ; J. BOUTROS.** A universal lattice code decoder for fading channel. *IEEE Trans. Inform. Theory,* July 1999, vol. 45, 1639-1642
- **C.P. SCHNORR ; M. EUCHNER.** Lattice basis reduction: Improved practical algorithms and solving subset sum problems. *Math. ProGraming,* 1994, vol. 66, 181-191